# EUROPÄISCHE PATENTSCHRIFT

(11) **EP 1 010 143 B1**
(45) Veröffentlichungstag und Bekanntmachung des Hinweises auf die Patenterteilung: **27.12.2006**
(21) Anmeldenummer: 97942770.5
(22) Anmeldetag: 02.09.1997
(51) Int. Cl.: G07C 5/08

(54) **NAVIGATIONSSYSTEM**
ROUTE GUIDANCE SYSTEM
SYSTEME DE NAVIGATION

(30) Priorität: 04.10.1996 DE 19640940
(43) Veröffentlichungstag der Anmeldung: 21.06.2000
(73) Patentinhaber: ROBERT BOSCH GMBH, 70442 Stuttgart (DE)
(72) Erfinder: WANNKE, Dietmar, D-72768 Reutlingen (DE)
(86) Internationale Anmeldenummer: PCT/DE1997/001916
(87) Internationale Veröffentlichungsnummer: WO 1998/015922

(56) Entgegenhaltungen:
- EP-A- 0 649 777
- DE-A- 4 220 963
- DE-A- 4 340 285
- DE-A- 19 509 711
- GB-A- 2 081 909
- GB-A- 2 271 180
- BÜCKEN RAINER: "Navigationstechnik fürs Auto" FUNKSCHAU, Nr. 5, 1996, DE, Seiten 74-79, XP002053575 in der Anmeldung erwähnt

## Beschreibung

### Stand der Technik

Die Erfindung geht aus von einem Navigationssystem nach der Gattung des unabhängigen Anspruchs. Aus der Zeitung Funkschau 5/96, Seiten 74ff ist schon ein Navigationssystem bekannt. Zu diesem Navigationssystem, welches zum Einbau in ein Kraftfahrzeug, insbesondere ein Automobil, bestimmt ist, gehören mehrere Vorrichtungen zur Standortbestimmung, eine Permanent-Speichereinheit, eine Ein-/Ausgabeeinheit, sowie eine Steuerung, welche sich alle an Bord des Fahrzeugs befinden. Die Standortbestimmung erfolgt einerseits durch GPS, welches auf Satelliten basiert. Zur relativen Positionsbestimmung sind darüber hinaus Kompaß- und Raddrehsensoren vorhanden. Über die Ein-/Ausgabeeinheit kann ein Ziel über Menuesteuerung eingegeben werden. In der Permanent-Speichereinheit, einer CD-ROM, stehen elektronische Straßen- und Stadtpläne zur Verfügung, aus welchen die Steuerung einen Routenvorschlag für die beste Verbindung zwischen derzeitigem Standort und Ziel berechnet.

Des weiteren sind aus dem Stand der Technik Fahrtenschreiber bekannt, mit denen die Geschwindigkeit eines Fahrzeugs über viele Stunden hinweg, beispielsweise auf einer Scheibe, aufgezeichnet wird. Diese Geräte sind jedoch so ausgelegt, daß sie kurzzeitige Geschwindigkeitsänderungen nur mit einer Verzögerung aufzeichnen. Auch sind kleine Geschwindigkeitsänderuhgen und kurze Zeitintervalle kaum auflösbar.

Aus der DE 4 220 963 A1 ist ein Fahrzeugnavigationssystem für Fahrzeug bekannt, das zum Abschätzen bzw. Bestimmen des Ortes des Fahrzeugs, zum Erfassen des Auftretens eines Unfalls, zum Speichern von Informationen für die Verwendung bei der Analyse des Unfalls und zum Durchführen einer Kommunikation mit außen dient. Das System umfaßt ein CD-ROM zum Speichern von Kommunikationsdaten für den Notfall, eine Ortseinheit zum Erzeugen von Daten über die Fahrzeugposition, eine Unfall erfassungseinheit und ein FIFO-Speicher, in dem die oben erwähnten Daten gespeichert werden und der jeweils im Laufe der verstreichenden Zeit aktualisiert wird.

### Vorteile der Erfindung

Die erfindungsgemäße Anordnung mit den kennzeichnenden Merkmalen des unabhängigen Anspruchs hat demgegenüber den Vorteil, daß der Bewegungszustand des Kraftfahrzeugs mit hoher zeitlicher und räumlicher Genauigkeit nachvollziehbar ist. Dies erlangt insbesondere Bedeutung bei der Klärung der Schuldfrage im Falle eines. Unfalls. Das Navigationssystem ist somit gleichzeitig vorteilhaft als Unfallschreiber nutzbar.

Durch die in den abhängigen Ansprüchen aufgeführten Maßnahmen sind vorteilhafte Weiterbildungen und Verbesserungen des im unabhängigen Anspruch angegebenen Navigationssystems möglich.

Es ist vorteilhaft, auch die Geschwindigkeit des Fahrzeugs abzuspeichern, da somit eine gewisse Redundanz in den Daten geschaffen wird, wodurch Aufzeichnungsfehler leicht korrigiert werden können.

Es ist vorteilhaft, die Daten über den Bewegungszustand des Fahrzeugs, wie die Position oder die Fahrtrichtung, in einem nichtflüchtigen Speicher abzulegen, da somit auch bei einer Unterbrechung der Stromzufuhr die Daten erhalten bleiben.

Weiterhin ist es besonders vorteilhaft, bei vollständig beschriebenem Speicher den ältesten Datensatz mit dem neuesten zu überschreiben, da somit mit großer Wahrscheinlichkeit die zur Klärung einer Unfallursache relevantesten Daten zur Verfügung stehen.

Die Speicherkapazität des Navigationssystems wird dann besonders effizient benutzt, wenn lange gleichbleibende Fahrtzustände nur zweimal abgespeichert werden.

Es ist vorteilhaft, den Speicherinhalt über Mittel, welche am Navigationssystem vorhanden, sind, wiederzugeben, beispielsweise über ein Display, da hierdurch einfache Fragen zur vorherigen Fahrt ohne aufwendigen Datentransfer zu anderen Auswertesystemen beantwortet werden können.

Schließlich ist es besonders vorteilhaft, das Überschreiben des Speichers entweder manuell, insbesondere durch Betätigen eines Bedienelements, oder durch ein vorbestimmtes Ereignis, beispielsweise eine extreme Verzögerung oder das Auslösen eines Airbags, zu blockieren. Hiermit wird sichergestellt, daß die relevanten Daten zur Klärung eines Unfallhergangs auch tatsächlich nach dem Unfall zur Verfügung stehen.

### Zeichnungen

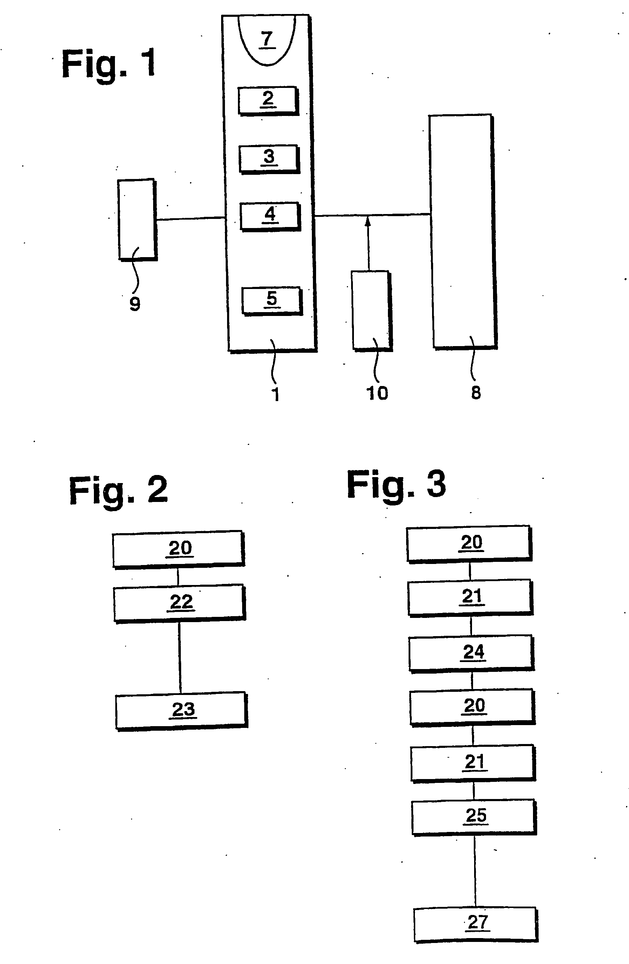

Ein Ausführungsbeispiel der Erfindung ist in der Zeichnung dargestellt und in der nachfolgenden Beschreibung näher erläutert. Es zeigen Figur 1 ein Navigationssystem, Figur 2 den Funktionsablauf im Navigationssystem.

### Beschreibung

Figur 1 zeigt ein erfindungsgemäßes Navigationssystem. Hierbei bezeichnet 1 ein Navigationssystem, dessen Funktionsweise beispielsweise in dem eingangs zitierten Artikel im Detail erläutert wird. Im Navigationssystem 1 ist eine Steuerung 4, eine Vorrichtung zur Positionsbestimmung 2, eine Vorrichtung zur Fahrtrichtungsbestimmung 3 enthalten. Weitere Einrichtungen 5 sind in Figur 1 zu einer Einheit zusammengefaßt. Mit dem Navigationssystem 1 ist ein nicht flüchtiger Speicher 8 verbunden, welcher im hier gewählten Ausführungsbeispiel als mit einer Batterie gepufferter RAM (Random Access Memory) ausgebildet ist. Die Datenübertragung zwischen dem Navigationssystem 1 und dem gepufferten Speicher 8 kann von einem Unfallsensor 10. beeinflußt und unter Umständen unterbrochen werden. Weiterhin ist mit dem Navigationssystem 1 ein Zeitmodul 9 verbunden. Das Navigationssystem 1 verfügt über eine Schnittstelle 7, über welche Daten ausgelesen werden können. Die auslesbaren Daten umfassen hierbei sowohl die momentan in Bearbeitung befindlichen Daten im Navigationssystem 1 als auch den Speicherinhalt des gepufferten Speichers 8.

Die Funktionsweise des Navigationssystems 1 wird anhand des Flußdiagramms in Figur 2 erläutert. Ein Datenaufbereitungszyklus wie er von der Steuerung 4 gesteuert wird, beginnt mit der Positionsfeststellung 20 durch das Navigationssystem 1. Unmittelbar nach der Positionsfeststellung 20 erfolgt die Zeitfeststellung 22. Diese erfolgt im hier gewählten Ausführungsbeispiel mit Hilfe des Zeitmoduls 9. Alternativ kann die Uhrzeit jedoch auch dem GPS-Signal entnommen werden. In einem darauffolgenden Schritt 23 wird der Datensatz, bestehend aus Positionsdaten und dem zugeordneten Zeitpunkt, in den nichtflüchtigen Speicher 8 geschrieben. Sind bereits alle Speicherbereiche mit Datensätzen beschrieben, so wird der älteste Datensatz gelöscht und durch den zu schreibenden Datensatz ersetzt.

Die Abspeicherung wird blockiert, sobald ein Hinweis auf einen Unfall vorliegt. Im vorliegenden Beispiel ist dies das Zünden eines Airbags, welches vom Unfallsensor 10 gemeldet wurde. Ebenso kann das Abspeichern manuell ausgeschaltet werden. Alternativ kann der Unfallsensor 10 auch als Beschleunigungssensor ausgebildet sein und so einen außergewöhnlichen Betriebszustand melden. Im Falle eines Unfalls kann der Speicherinhalt über die Schnittstelle 7 ausgelesen werden. Die Daten sind dann mit bekannten Mitteln, beispielsweise in einem anderen Rechner weiterverarbeitbar. Beispielsweise kann aus den Datensätzen, welche Position und Zeit umfassen, die Geschwindigkeit sowie die Verzögerung oder Beschleunigung des Fahrzeugs berechnet werden.

Alternativ hierzu jedoch nicht als solches zur Erfindung gehörig ist es möglich, die momentane Geschwindigkeit im Navigationssystem 1 zu berechnen, und zusammen mit der zugeordneten Position und Zeit in den nichtflüchtigen Speicher 8 zu schreiben. Die daraus resultierende Funktionsweise ist in Figur 3 dargestellt. In einem ersten Schritt 20 wird eine erste Position gemessen und in einem zweiten Schritt 21 zwischengespeichert. Hierauf folgt ein Warteschritt 24, der ein kleines Zeitintervall DT andauert, welches vom Zeitmodul 9 gemessen wird, und sinnvollerweise fest vorgegeben ist. In einem darauffolgenden Schritt erfolgt erneut eine Positionsbestimmung 20. Darauf folgt ein Zwischenspeicherschritt 21, in welchem die zweite Position ebenfalls im Zwischenspeicher abgelegt wird. Im Rechenschritt 25 wird die Geschwindigkeit aus diesen beiden Datensätzen ausgerechnet, indem die zurückgelegte Wegstrecke durch das Zeitintervall dividiert wird. In einem nächsten Schritt 27 wird der Datensatz aus Position zum Ende des zeitintervalls, Geschwindigkeit und dem Zeitpunkt der zweiten Positionsbestimmung im nichtflüchtigen Speicher 8 abgelegt. Hierbei wird, wie im vorhergehenden Beispiel, der älteste Datensatz überschrieben, sobald der nichtflüchtige Speicher 8 voll ist.

Zu den oben ausgeführten Beispielen ergeben sich vielfältige Abwandlungsmöglichkeiten. Beispielsweise ist es zur oben geschilderten Funktionsweise äquivalent, einen Datensatz bestehend aus der Position zu Beginn des Zeitintervalls, der Geschwindigkeit und dem Zeitpunkt zu Beginn des Zeitintervalls abzuspeichern.

Da die Fahrtrichtung bereits von dem Navigationssystem erfaßt wird, ist es möglich und auch wünschenswert, die Fahrtrichtung ebenfalls abzuspeichern. Zum einen ist es denkbar, daß die Fahrtrichtung für die Klärung einer Unfallursache relevant ist, zum anderen ist dann die Geschwindigkeit bei einer Kurvenfahrt aus den Positionsdaten genauer berechenbar, da nicht auf eine lineare Interpolation zur Berechnung der wegstrecke zurückgegriffen werden muß.

Eine weitere Ausgestaltungsmöglichkeit ergibt sich dadurch, daß das Navigationssystem 1 über Vorrichtungen zur Messung der Geschwindigkeit verfügt. In dieser Weise vereinfacht sich die Funktionsweise, da die gemessene Geschwindigkeit zusammen einer zur selben Zeit bestimmten Position und diesem Zeitpunkt als Datensatz abgespeichert werden kann.

Eine weitere Ausgestaltungsmöglichkeit ergibt sich dadurch, daß der Inhalt des nichtflüchtigen Speichers personalisiert wird. Hierbei können zu Fahrtbeginn oder auch zu einer beliebigen späteren Zeit, Daten über den Fahrer oder das Fahrzeug eingegeben werden. Hierfür kann dieselbe Eingabevorrichtung des Navigationssystem 1 benutzt werden, welche schon zur Eingabe eines Fahrzielwunschs vorhanden ist. Die eingegebenen Daten können dann, vorzugsweise zusammen mit dem Eingabezeitpunkt, ebenfalls im nichtflüchtigen Speicher abgelegt werden. In diesem Fall ist es vorteilhaft, diese Personalisierungsdaten vom Überschreiben des jeweils ältesten Datensatzes auszunehmen.

Schließlich ergibt sich die erfindungswesentliche Ausgestaltungsmöglichkeit, welche den Vorteil hat den Speicher (8) rationeller zu benutzen, dadurch, daß die Steuerung die Position in den letzten beiden abgespeicherten Datensätzen mit der Position in dem neuen abzuspeichernden Datensatz vergleicht und den neuen Datensatz nur dann abspeichert, wenn wenigstens zwei der drei in den Datensätzen enthaltenen Positionen sich unterscheiden. Somit wird vermieden, daß längere Standzeiten dazu führen, daß der Speicher mit redundanten Informationen vollgeschrieben wird.

## Patentansprüche

1. Auf elektronische Straßen- und Stadtpläne gestütztes Navigationssystem für ein Kraftfahrzeug, insbesondere ein Automobil,
mit einer Vorrichtung zur Positionsbestimmung durch das Navigationssystem und
mit einer Eingabeeinrichtung für ein Ziel, wobei
eine Vorrichtung zur Zeiterfassung (9) vorgesehen ist und
ein Speicher (8) vorgesehen ist, **dadurch gekennzeichnet,**
**dass** im Speicher eine von der Vorrichtung zur Positionsbestimmung ermittelte Position zusammen mit einer dazugehörigen erfassten Uhrzeit in einem Datensatz abgelegt ist, und
**dass** im Speicher eine vorgegebene Anzahl von Datensätzen mit der Position und einer zugeordneten Uhrzeit abspeicherbar sind sowie
**dass** der Datensatz nur abgespeichert wird, wenn die Position sich von wenigstens einer Position der beiden letzten abgespeicherten Datensätze unterscheidet.

2. Navigationssystem nach Anspruch 1, **dadurch gekennzeichnet, daß** eine Vorrichtung zur Messung der Geschwindigkeit vorgesehen ist, und/oder die . Geschwindigkeit im Navigationssystem berechenbar ist, und daß die Geschwindigkeit ebenfalls abspeicherbar ist.

3. Navigationssystem nach einem der vorhergehenden Ansprüche, **dadurch gekennzeichnet, daß** der Speicher (B) als nichtflüchtiger Speicher, insbesondere als durch eine Batterie gepufferter RAM, ausgebildet ist.

4. Navigationssystem nach einem der vorhergehenden Ansprüche, **dadurch gekennzeichnet, daß** nach dem vollständigen Beschreiben des Speichers (8) mit Datensätzen der Datensatz, dessen Speicherung am längsten zurückliegt, überschreibbar ist.

5. Navigationssystem nach einem der vorhergehenden Ansprüche, **dadurch gekennzeichnet, daß** Mittel zur Wiedergabe des Speicherinhalts vorgesehen sind.

6. Navigationssystem nach einem der vorhergehenden Ansprüche, **dadurch gekennzeichnet, daß** der Speicherinhalt des Speichers (8) über eine Schnittstelle (7) auslesbar ist.

7. Navigationssystem nach einem der vorhergehenden Ansprüche, **dadurch gekennzeichnet, daß** das Abspeichern manuell und/oder durch ein vorbestimmtes Ereignis blockierbar ist.

8. Navigationssystem nach Anspruch 7, **dadurch gekennzeichnet, daß** das vorbestimmte Ereignis zum Blockieren des Überschreibens des Speichers ein Unfallsignal, beispielsweise das Zünden eines Airbags oder eine starke Verzögerung, ist.

9. Navigationssystem nach einem der vorhergehenden Ansprüche, **dadurch gekennzeichnet, daß** zusätzlich Fahrer- und/oder Fahrzeugdaten im Speicher (8) speicherbar sind.

10. Navigationssystem nach einem der vorhergehenden Ansprüche, **dadurch gekennzeichnet**, eine Vorrichtung zur Fahrtrichtungsbestimmung (3) vorgesehen ist, und daß Daten zur Fahrtrichtung erfaßbar und im Speicher (8) speicherbar sind.

## Claims

1. Navigation system for a motor vehicle, especially a car, which is based on electronic roadmaps and city maps, having a device for determining positions by means of the navigation system and having an input device for a destination, a timing device (9) being provided and a memory (8) being provided, **characterized in that** a position which is determined by the device for determining positions is stored in a data record together with an associated recorded time in the memory, and **in that** a predefined number of data records can be stored with the position and an associated time in the memory, and **in that** the data record is stored only if the position differs from at least one position of the two data records stored last.

2. Navigation system according to Claim 1, **characterized in that** a device for measuring the speed is provided, and/or the speed can be calculated in the navigation system, and **in that** the speed can also be stored.

3. Navigation system according to one of the preceding claims, **characterized in that** the memory (8) is embodied as a non-volatile memory, in particular as a RAM which is buffered by a memory.

4. Navigation system according to one of the preceding claims, **characterized in that** after the memory (8) has been completely filled with data records, the data record which was stored the longest time ago can be overwritten.

5. Navigation system according to one of the preceding claims, **characterized in that** means for reproducing the memory content are provided.

6. Navigation system according to one of the preceding claims, **characterized in that** the memory content of the memory (8) can be read out via an interface (7).

7. Navigation system according to one of the preceding claims, **characterized in that** the storage can be blocked manually and/or by a predetermined event.

8. Navigation system according to Claim 7, **characterized in that** the predetermined event for blocking the overwriting of the memory is an accident signal, for example the firing of an airbag or severe deceleration.

9. Navigation system according to one of the preceding claims, **characterized in that** driver data and/or vehicle data can additionally be stored in the memory (8).

10. Navigation system according to one of the preceding claims, **characterized in that** a device (3) for determining the direction of travel is provided, and **in that** data relating to the direction of travel can be recorded and stored in the memory (8).

## Revendications

1. Système de navigation s'appuyant sur des cartes électroniques de routes et de villes, pour un véhicule à moteur, notamment un véhicule automobile comportant un dispositif pour déterminer la position par le système de navigation et
une installation d'entrée de la destination,
avec un dispositif de saisie du temps (9) et une mémoire (8),
**caractérisé en ce que**
la mémoire contient l'enregistrement d'une position déterminée par le dispositif de détermination de position ainsi que l'heure saisie de façon correspondante dans un jeu de données et
la mémoire comporte un nombre prédéfini de jeux de données avec la position et l'heure associée, et
le jeu de données n'est enregistré que si la position diffère au moins de la position du dernier jeu de données enregistré.

2. Système de navigation selon la revendication 1,
**caractérisé par**
un dispositif qui mesure la vitesse et/ou la vitesse se calcule dans le système de navigation et
la vitesse peut également être enregistrée en mémoire.

3. Système de navigation selon l'une des revendications précédentes,
**caractérisé en ce que**
la mémoire (8) est une mémoire non volatile, notamment une mémoire RAM alimentée par une batterie.

4. Système de navigation selon l'une des revendications précédentes,
**caractérisé en ce qu'**
une fois la mémoire (8) complètement occupée par des inscriptions de jeux de données, on remplace le jeu de données dont l'enregistrement est le plus ancien.

5. Système de navigation selon l'une quelconque des revendications précédentes,
**caractérisé par**
des moyens pour reproduire le contenu de la mémoire.

6. Système de navigation selon l'une quelconque des revendications précédentes,
**caractérisé en ce que**
le contenu de la mémoire (8) peut être lu à partir d'une interface (7).

7. Système de navigation selon l'une quelconque des revendications précédentes,
**caractérisé en ce que**
l'enregistrement en mémoire peut se bloquer manuellement et/ou par un événement prédéfini.

8. Système de navigation selon la revendication 7,
**caractérisé en ce que**
l'événement prédéfini de blocage du remplacement de l'inscription de la mémoire est un signal d'accident, par exemple le déclenchement d'un coussin gonflable ou une forte décélération.

9. Système de navigation selon l'une quelconque des revendications précédentes,
**caractérisé en ce que**
des données complémentaires relatives au conducteur et/ou véhicule sont enregistrées dans la mémoire (8).

10. Système de navigation selon l'une quelconque des revendications précédentes,
**caractérisé par**
un dispositif pour déterminer la direction de déplacement (3) et des données de direction de déplacement peuvent être saisies et enregistrées dans la mémoire (8).
